# EUROPÄISCHE PATENTANMELDUNG

(11) **EP 0 936 016 A1**
(43) Veröffentlichungstag der Anmeldung: **18.08.1999**
(21) Anmeldenummer: 98102241.1
(22) Anmeldetag: 10.02.1998
(51) Int. Cl.: B23D 77/00, B23B 51/02, B23B 51/10, B24B 5/48, B24B 33/00

(54) **Verfahren zum Feinbearbeiten eines Werkstückes**

(71) Anmelder: Maschinenfabrik Gehring GmbH & Co., D-73760 Ostfildern (DE)
(72) Erfinder: Klink, Ulrich, 72639 Neuffen (DE); Lang, Ernst, 73760 Ostfildern (DE)
(74) Vertreter: Riedel, Peter, Dipl.-Ing.

(57) **Zusammenfassung**

Zum Feinbearbeiten eines Werkstückes mittels eines angetriebenen Feinbearbeitungswerkzeugs sind verschiedene Verfahren bekannt, wobei ein Werkzeug durch Rotation und eine Zustellbewegung mechanisch auf eine Fase oder Stirnfläche am Rande oder innerhalb einer Bohrung des Werkstückes einwirkt. Zur Steigerung der Präzision werden in einem Arbeitsgang drei Stufen durchgeführt, und zwar durch drei an dem Feinbearbeitungswerkzeug ausgebildete Abschnitte. In einer ersten Stufe erfolgt eine Zentrierung des Feinbearbeitungswerkzeugs in der Bohrung, in einer zweiten Stufe die Feinbearbeitung der Bohrung und in einer dritten Stufe die Feinbearbeitung der Fase oder Stirnfläche.

## Beschreibung

Die Erfindung betrifft ein Verfahren zum Feinbearbeiten eines Werkstücks der im Oberbegriff des Anspruchs 1 angegebenen Gattung.

Das Feinbearbeiten einer Fase oder Stirnfläche an Bohrungen ist erforderlich, wenn die Fase oder die Stirnfläche einen Dichtsitz für eine Ventilnadel bilden, wie beispielsweise in Einspritzpumpen für Brennkraftmaschinen. Solche Bohrungen haben meist einen sehr kleinen Durchmesser von nur wenigen Millimetern und müssen hochgenau bearbeitet sein. Die den Rand der Bohrungen bildende oder ihn umgebende Fase bzw. Stirnfläche des Werkstücks ist ebenfalls sehr genau zu bearbeiten. Ferner muß darauf geachtet werden, daß die Stirnfläche genau rechtwinklig oder die kegelstumpfförmige Fläche einer Fase genau koaxial zur Bohrungsachse liegt, da nur bei entsprechender Präzision von Bohrung und Fase bzw. Stirnfläche eine zuverlässige Funktion erreicht werden kann.

Aus der DE 44 41 623 C2 ist ein Verfahren zum Feinschleifen einer Fase am Anfang einer Bohrung bekannt, bei der die Fase mittels eines angepaßten Schleifabschnitts eines Werkzeugs bearbeitet wird. Das bekannte Werkzeug führt eine Drehbewegung sowie eine Zustellbewegung aus und weist einen an den Schleifabschnitt sich anschließenden Führungszapfen auf, mit dem es in der bereits fertig bearbeiteten gehonten Bohrung geführt ist. Das notwendige Führungsspiel für den Führungszapfen beeinträchtigt die erreichbare Genauigkeit für die Koaxialität von Bohrung und Fase.

Die EP 0 802 018 A1 beschreibt eine Vorrichtung zum Schleifen einer Stirnfläche, insbesondere einer Ringfläche am Rande einer Werkstückbohrung, bei der das Schleifwerkzeug winklig zur Achse eines Führungszapfens ausgerichtet ist. Während der Rotation ist das Schleifwerkzeug quer zur Achse periodisch verschiebbar. Diese bekannte Vorrichtung kann zwar auf engem Raum realisiert werden, die Bearbeitung stößt aber bei sehr kleinen Bohrungen, z.B. im Bereich von 1 mm bis 3 mm, an die Grenze der Realisierbarkeit. Außerdem wirkt sich auch hier das erforderlich Führungsspiel des Führungszapfens in der bereits gehonten Bohrung nachteilig aus.

Der vorliegenden Erfindung liegt die Aufgabe zugrunde, ein Verfahren der im Oberbegriff des Anspruchs 1 angegebenen Gattung zu schaffen, bei dem die Feinbearbeitung des Werkstücks verbessert wird.

Diese Aufgabe wird durch ein Verfahren mit den Merkmalen des Anspruchs 1 gelöst.

Die besonderen Vorteile der Erfindung sind darin zu sehen, daß eine äußerst präzise Bearbeitung der Fase bzw. Stirnfläche erfolgt, insbesondere hinsichtlich des Winkels der Fase oder Stirnfläche gegenüber der Bohrung sowie der Oberflächenbeschaffenheit, Rundheit und Koaxialität. Das Verfahren ist selbst für Werkstücke mit sehr kleinen Bohrungen geeignet. Wesentlich für die Genauigkeit der Feinbearbeitung ist dabei, daß in einem Arbeitsgang sowohl eine Nachbearbeitung der Bohrung erfolgt und ohne Werkzeugwechsel in einer weiteren Bearbeitungsstufe die Fase oder Stirnfläche feinbearbeitet wird. In besonders bevorzugter Weise kann die Bearbeitung der drei Stufen des Arbeitsganges im harten Zustand des Werkstückes erfolgen. Das hat den Vorteil, daß nach der Feinbearbeitung keine nachträgliche Härtebehandlung erforderlich ist, die zu die Präzision verschlechternden Deformationen führt.

Bei der Durchführung des Verfahrens können die zweite Stufe und die dritte Stufe des Arbeitsganges unmittelbar aufeinanderfolgend ausgeführt werden, es besteht jedoch ebenso die Möglichkeit, daß die zweite Stufe und dritte Stufe teilweise zeitlich überlagert durchgeführt werden. In einer ersten Stufe wird zur Zentrierung des Feinbearbeitungswerkzeugs in der Bohrung ein Zentrierkegel eingeführt, an den sich ein Führungsabschnitt anschließt. Es wird dabei als zweckmäßig angesehen, mittels des Führungsabschnitts die Bohrung vorzuschneiden, so daß bereits in dieser Stufe des Arbeitsganges eine spielfreie Bearbeitung erfolgt.

Die zweite Stufe dient vorzugsweise der Zerspanung mit anschließender Kalibrierung, so daß die Bohrung nach der zweiten Stufe das Fertigmaß besitzt. Die dritte Stufe und somit die Feinbearbeitung der Fase oder Stirnfläche sollte erst beginnen, wenn die Zerspanung in der zweiten Stufe abgeschlossen ist, es ist jedoch durchaus möglich, während des Kalibrierens in der zweiten Stufe mit der dritten Stufe zu beginnen.

Gemäß einer weiteren bevorzugten Ausgestaltung kann die zweite und dritte Stufe des Arbeitsganges zweimal durchgeführt werden, wobei vorzugsweise mit der ersten Durchführung der zweiten und dritten Stufe etwa 70% bis 90% des Aufmaßes von Bohrung und Fase bzw. Stirnfläche zerspant wird. Auf diese Weise können höchste Ansprüche an Maßhaltigkeit und Oberflächenbeschaffenheit des Werkstückes erfüllt werden. Weiterhin ist es von Vorteil, den Arbeitsgang, zumindest jedoch eine Stufe des Arbeitsganges mit einer hohen Drehzahl durchzuführen, wobei als besonders geeignet Drehzahlen zwischen 3000 min⁻¹ und 12000 min⁻¹ angesehen werden. Die Zustellbewegung beträgt dabei zweckmäßigerweise 0,01 mm/min⁻¹ bis 0,08 mm/min⁻¹ .

Zur Durchführung des Verfahrens wird ein Werkzeug benutzt, das als Stufen-Reibwerkzeug ausgebildet ist, das heißt, es umfaßt einen Führungsabschnitt sowie einen Arbeitsabschnitt zum Feinbearbeiten der Bohrung und einen Arbeitsabschnitt zum Feinbearbeiten der Fase bzw. Stirnfläche. Das Werkzeug erzeugt dadurch, daß es ein geringes Übermaß gegenüber der Werkstückbohrung aufweist, durch einen Feinzerspanvorgang seine Führung in der Bohrung selbst, so daß während der anschließenden Feinbearbeitung der Fase oder Stirnfläche am Rande oder innerhalb der Bohrung das Werkzeug absolut spielfrei geführt ist.

Ein Ausführungsbeispiel des erfindungsgemäßen Verfahrens ist nachstehend anhand der Zeichnung näher erläutert. In der Zeichnung zeigt:
- Fig. 1: einen Längsschnitt durch ein Werkstück mit einer Bohrung und einer Fase,
- Fig. 2: eine schematische Darstellung einer Vorrichtung zur Durchführung des Verfahrens bei der Feinbearbeitung der Bohrung,
- Fig. 3: eine Darstellung der Vorrichtung während der Feinbearbeitung der Fase.

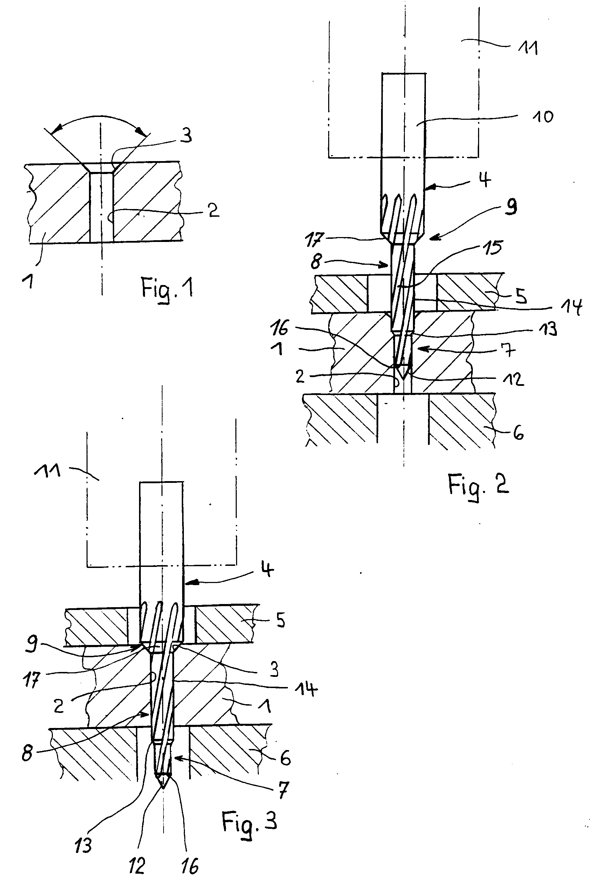

Die Fig. 1 zeigt einen nicht maßstäblichen Schnitt durch ein zu bearbeitendes Werkstück 1 mit einer durchgehenden vertikalen Bohrung 2, welche an ihrem oberen Rand eine konzentrische Fase 3 aufweist. Die Bohrung und Fase sind so vorbearbeitet, daß sie zum geforderten Endzustand noch ein Aufmaß haben. Entsprechend der Bearbeitungsaufgabe handelt es sich meist um kleine Bohrungsdurchmesser von wenigen Millimetern; im beschriebenen Beispiel soll der Durchmesser im Bereich von 2 mm bis 3 mm liegen. Für die erfindungsgemäße Feinbearbeitung der Bohrung ist ein Aufmaß von 0,05 mm bis 0,1 mm vorgesehen. Die Fase ist vorzugsweise bis auf etwa 0,01 mm bis 0,03 mm Aufmaß vorbearbeitet, sie kann aber je nach Werkstück zum Beispiel bei sehr schmalen Fasen auch direkt durch die erfindungsgemäße Feinbearbeitung hergestellt werden. Vor der Feinbearbeitung von Bohrung 2 und Fase 3 wurde das Werkstück 1 gehärtet.

Die Fig. 2 und 3 zeigen jeweils im Axialschnitt unterschiedliche Stufen eines Arbeitsganges zur Feinbearbeitung. Der Arbeitsgang umfaßt drei Stufen I, II, III, welche mit einem Stufenreibwerkzeug 4 durchgeführt werden. Während der Bearbeitung ist das Werkstück 1 in einer an sich bekannten Vorrichtung zwischen zwei Aufnahmeplatten 5 und 6 schwimmend gehalten oder kann auch in nicht dargestellter und ebenfalls bekannter Weise kardanisch aufgenommen sein. Ferner ist eine nicht dargestellte Zuführung für eine Kühl- oder Schneidflüssigkeit zu der Bearbeitungsstelle vorgesehen.

Das Stufenreibwerkzeug 4 weist einen vorderen Führungs- und Vorschneideabschnitt 7, einen sich daran anschließenden Hauptschneideabschnitt 8 und einen daran sich anschließenden Sitzbearbeitungsabschnitt 9 auf. Das Stufenreibwerkzeug 4 besitzt Drallnuten 15 und mindestens eine Schneide, vorzugsweise sind jedoch mehrere Schneiden 13, 16, 17 vorgesehen; im gezeigten Ausführungsbeispiel sind es drei Schneiden, auf die später noch näher eingegangen wird. Das Stufenreibwerkzeug 4 hat ferner einen glatten zylindrischen Spannschaft 10, mit dem es in ein (strichpunktiert angedeutetes) Präzisionsspannfutter 11 eingespannt ist, das eine sehr hohe Rundlaufgenauigkeit gewährleistet. Für die Feinbearbeitung des im harten Zustand befindlichen Werkstückes 1 sind die Schneidbereiche des Stufenreibwerkzeugs 4 mit einem superharten Schneidstoff beschichtet, z.B. mit CBN (kubisches Bornitrid) oder TICN (Titancarbid), oder das Stufenreibwerkzeug 4 ist vollständig aus Hartstoff, z.B. aus Hartmetall gefertigt.

In Fig. 2 ist die Bearbeitung der Bohrung 2 gezeigt. Dazu wird das Reibwerkzeug 4 rotierend mit hoher Drehzahl getrieben und in axialer Richtung relativ langsam in die Bohrung 2 eingefahren. Dabei beträgt die Drehzahl vorzugsweise 3000 min⁻¹ bis 12000 min⁻¹ und die Zustellbewegung 0,01 mm/min⁻¹ bis 0,08 mm/min⁻¹. In der ersten Stufe I zentriert zunächst eine konische Spitze 12 des vorderen Führungs- und Vorschneideabschnitts 7 die Bohrung 2 zur Achse des Reibwerkzeugs 4, wobei auch die Schneide 16 mit der Bohrung 2 in Eingriff kommt. Dann sorgt der Führungs- und Vorschneideabschnitt 7, der dem Durchmesser der Bohrung 2 entspricht, für eine gute Führung. Alternativ zu der dargestellten Ausführung kann der Führungsabschnitt 7 auch ohne Schneide 16 ausgeführt sein, wodurch das Vorschneiden entfällt. In diesem Fall besitzt der Führungsabschnitt 7 den Durchmesser der unbearbeiteten Bohrung.

Beim weiteren Einfahren des Reibwerkzeugs 4 kommt dann der Hauptschneideabschnitt 8 an dessen Anfang sich die Schneide 13 befindet, in Schneideingriff. In dieser zweiten Stufe II des Verfahrens erfolgt die eigentliche Zerspanung. Der zylindrische Teil des Hauptschneideabschnitts 8 bewirkt eine Egalisierung und Kalibrierung der Bohrung 2.

Die axiale Länge des Hauptschneidabschnittes 8 ist derart bemessen, daß die Schneide 13 des Hauptabschnittes 8 vollständig durch die Bohrung 2 hindurchgefahren wird und diese gemäß Darstellung in Fig. 3 auf der Unterseite des Werkstückes 1 austritt. Erst danach kommt die Schneide 17 des Sitzbearbeitungsabschnittes 9 in Arbeitseingriff mit der Fase 3 des Werkstückes 1, wodurch nun die dritte Stufe III des Arbeitsganges, nämlich die Feinbearbeitung der Fase 3 erfolgt. Dabei ist es möglich, die Stufe III der Feinbearbeitung zu beginnen, während die Kalibrierung in der Stufe II noch nicht abgeschlossen ist. Die Stufe III kann sich jedoch auch unmittelbar an die Beendigung der Stufe II anschließen.

In weiterer Ausgestaltung der Erfindung kann die Bohrung 2 im Anschluß an die Feinbearbeitung in einem weiteren Arbeitsgang gehont werden. Das Honen erfolgt dabei in an sich bekannter Weise mit einem Honwerkzeug, das mit superhartem Schleifmittel feiner Körnung, z.B. Diamant der Körnung D 3 bis D15 bestückt ist. Das Werkstück ist dazu in einer Vorrichtung wie bei dem zuvor beschriebenen Arbeitsgang der Feinbearbeitung schwimmend oder kardanisch gehalten. Durch das Honen wird eine weitere Verbesserung der Durchmessertoleranz, Formgenauigkeit und Oberflächengüte erzielt. Sofern besonders hohe Ansprüche an die Formgenauigkeit und Oberflächengüte der Bohrung gestellt sind, kann es zweckmäßig sein, das Honen der Bohrung in zwei Vorgänge, nämlich ein Vor- und ein Fertighonen aufzuteilen.

Eine weitere Ausgestaltung des vorstehend beschriebenen Verfahrens besteht darin, daß die Stufen II und III des vorstehend beschriebenen Arbeitsganges wiederholt, das heißt ein zweites Mal ausgeführt werden. Hierfür wird vorgeschlagen, mit einem im Durchmesser entsprechend kleineren Reibwerkzeug 4 in der ersten Durchführung der Stufen II und III etwa 70% bis 90% des Aufmaßes von Bohrung 2 und Fase 3 zu zerspanen und den Rest bis zum Fertigmaß in der wiederholten Durchführung der Stufen II und III abzutragen.

## Patentansprüche

1. Verfahren zum Feinbearbeiten eines Werkstückes (1) mittels eines angetriebenen Feinbearbeitungswerkzeugs (4), insbesondere einem Reibwerkzeug, das durch Rotation und eine Zustellbewegung mechanisch auf eine Fase (3) oder Stirnfläche am Rande oder innerhalb einer Bohrung (2) des Werkstückes (1) einwirkt, dadurch gekennzeichnet, daß das Verfahren in einem Arbeitsgang drei Stufen (I, II, III) umfaßt, welche durch drei an dem Feinbearbeitungswerkzeug (4) ausgebildete Abschnitte (7, 8, 9) durchgeführt werden, wobei in einer ersten Stufe (I) eine Zentrierung des Feinbearbeitungswerkzeugs (4) in der Bohrung (2) erfolgt, in einer zweiten Stufe (II) die Feinbearbeitung der Bohrung (II) durchgeführt wird und in einer dritten Stufe (III) die Fase (3) oder Stirnfläche feinbearbeitet wird.

2. Verfahren nach Anspruch 1,
dadurch gekennzeichnet, daß die zweite Stufe (II) und die dritte Stufe (III) teilweise zeitlich überlagert durchgeführt werden.

3. Verfahren nach Anspruch 1 oder 2,
dadurch gekennzeichnet, daß in der ersten Stufe (I) ein Zentrierkegel (12) mit einem darauf folgenden Führungsabschnitt (7) in die Bohrung (2) eingeführt wird.

4. Vorrichtung nach Anspruch 3,
dadurch gekennzeichnet, daß mittels des Führungsabschnitts (7) ein Vorschneiden der Bohrung (2) erfolgt.

5. Verfahren nach einem der Ansprüche 1 bis 4,
dadurch gekennzeichnet, daß in der zweiten Stufe (II) eine Zerspanung mit anschließender Kalibrierung erfolgt.

6. Verfahren nach Anspruch 5,
dadurch gekennzeichnet, daß die dritte Stufe (III) erst beginnt, wenn die Zerspanung in der zweiten Stufe (II) abgeschlossen ist.

7. Verfahren nach einem der vorhergehenden Ansprüche, dadurch gekennzeichnet, daß die zweite und dritte Stufe (II, III) des Arbeitsganges zweimal durchgeführt werden, wobei vorzugsweise mit der ersten Durchführung der zweiten und dritten Stufe (II, III) etwa 70% bis 90% des Aufmaßes von Bohrung (2) und Fase (3) bzw. Stirnfläche zerspant werden.

8. Verfahren nach einem der Ansprüche 1 bis 7,
dadurch gekennzeichnet, daß zumindest eine Stufe des Arbeitsganges mit einer Drehzahl des Feinbearbeitungswerkzeugs (4) zwischen 3000 min⁻¹ und 12000 min⁻¹ und/oder eine Zustellbewegung von 0,01 mm/min⁻¹ bis 0,08 mm/min⁻¹ durchgeführt wird.

9. Verfahren nach einem der Ansprüche 1 bis 8,
dadurch gekennzeichnet, daß die drei Stufen (I, II, III) des Arbeitsganges im gehärteten Zustand des Werkstückes (1) durchgeführt werden.

10. Verfahren nach einem der Ansprüche 1 bis 9,
dadurch gekennzeichnet, daß das Werkstück (1) während des Arbeitsganges schwimmend gelagert oder kardanisch aufgehängt ist.

11. Verfahren nach einem der Ansprüche 1 bis 10,
dadurch gekennzeichnet, daß im Anschluß an den Arbeitsgang eine ein- oder mehrstufige Honbearbeitung der Bohrung (2) erfolgt.
